# EUROPEAN PATENT APPLICATION

(11) **EP 2 613 504 A1**
(43) Date of publication of application: **10.07.2013**
(21) Application number: 13000001.1
(22) Date of filing: 02.01.2013
(51) Int. Cl.: H04M 1/67, H04M 1/725, G06F 21/88

(54) **Method and apparatus for facilitating communication between a finder of a misplaced wireless terminal and an authorized user**

(30) Priority: 03.01.2012 US 201213342577
(71) Applicant: Sony Mobile Communications AB, 221 88 Lund (SE)
(72) Inventor: Ibrahim, Wael, San Diego, CA 92128 (US)
(74) Representative: Schwarz, Markku

(57) **Abstract**

One or more embodiments of a method and apparatus taught herein facilitate communication between a finder of a misplaced wireless terminal (20) and an authorized user of the wireless terminal (20). At least one menu option (42) is presented to the finder for contacting the authorized user via a wireless communication network with which the wireless terminal (20) is associated. The at least one menu option (42) is accessible from a lock screen (40A) of the wireless terminal (20) without entry of the passcode. Responsive to the finder selecting one of the at least one menu options (42), a communication is initiated between the finder and the authorized user via the wireless communication network. According to another method, responsive to receiving a message indicating that a wireless terminal (20) has been misplaced, communication functionality of the wireless terminal (20) is disabled and a message is presented on the wireless terminal (20) that provides information for returning the wireless terminal (20) to an authorized user.

## Description

### TECHNICAL FIELD

The present invention generally relates to wireless terminal security, and more particularly relates to a method and apparatus for facilitating contact between a finder of a misplaced wireless terminal and an authorized user of the wireless terminal.

### BACKGROUND

As the popularity of wireless terminals, such as cellular phones, smartphones, personal digital assistants (PDAs), laptops, etc. continues to grow, these devices are becoming more and more ubiquitous. Users often carry their wireless terminals with them at all times. Such widespread use has heightened concern for loss and theft of wireless terminals. This concern is amplified by the personal and confidential nature of the data that is often stored on these devices.

To protect valuable data, wireless terminals are often passcode-locked to prevent unauthorized access to user data. Such passcodes may include an alphanumeric password, or a predefined touchscreen gesture, for example.

As a further security measure, prior art devices have also included various additional features, such as permitting a remote wipe of a lost phone, or permitting remote initiation of a lock screen on a lost phone. Such security measures operate under the assumption that a finder of a lost wireless terminal may act maliciously upon finding the lost terminal to misuse data, possibly using the terminal to engage in theft or to incur substantial billing charges.

### SUMMARY

Methods and apparatus for facilitating contact between a finder of a misplaced wireless terminal and an authorized user of the wireless terminal, and/or for providing information for returning the misplaced wireless terminal are disclosed.

An exemplary method facilitates communication between a finder of a misplaced passcode-locked wireless terminal and an authorized user of the wireless terminal. According to the method, at least one menu option is presented to the finder for contacting the authorized user via a wireless communication network with which the wireless terminal is associated. The at least one menu option is accessible from a lock screen of the wireless terminal without entry of the passcode. Responsive to the finder selecting one of the at least one menu options, a communication is initiated between the finder and the authorized user via the wireless communication network. A corresponding wireless terminal operable to implement this method is also described.

An example method that is applicable to both passcode-locked and non passcode-locked wireless terminals facilitates communication between a finder of a misplaced wireless terminal and an authorized user of the wireless terminal. At least one menu option is presented to the finder for contacting an authorized user via a wireless communication network with which the wireless terminal is associated. Responsive to the finder selecting one of the at least one menu options, predefined contact information for the authorized user is used to initiate a communication between the finder and the authorized user via the wireless communication network, with the at least one menu option and the initiated communication hiding the predefined contact information from the finder. The presenting of the at least one menu option for contacting the authorized user may comprise presenting a menu option for each of a plurality of different contact methods.

In one or more of the methods described above, the step of presenting to the finder at least one menu option for contacting the authorized user of the wireless terminal includes presenting a menu option for each of a plurality of different contact methods.

In another exemplary method, information for returning a misplaced wireless terminal to an authorized user of the wireless terminal is provided to a finder of the misplaced wireless terminal. The wireless terminal receives a message from the authorized user indicating that the wireless terminal has been misplaced. Responsive to the received message, communication functionality of the wireless terminal is disabled, and a message is presented on a display of the wireless terminal that provides information for returning the wireless terminal to the authorized user. The message may also indicate a reward that is achievable by returning the wireless terminal to the authorized user. A corresponding wireless terminal operable to implement this method is also described.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 illustrates an exemplary communication network.

Figs. 2A and 2B illustrate exemplary lock screens including a menu option for contacting an authorized of a wireless terminal.

Fig. 3 illustrates a plurality of example menu options for contacting the authorized user.

Fig. 4 illustrates a message entry screen.

Fig. 5 illustrates an example message providing information for the return of a lost wireless terminal.

Fig. 6 illustrates an example method of facilitating communication between a finder of a misplaced passcode-locked wireless terminal and an authorized user of the wireless terminal.

Fig. 7 illustrates an example method of facilitating communication between a finder of a misplaced wireless terminal and an authorized user of the wireless terminal, that is applicable to both passcode-locked and non passcode-locked terminals.

Fig. 8 illustrates an example method of providing a finder of a misplaced wireless terminal information for returning the wireless terminal to an authorized user.

Fig. 9 illustrates an example wireless terminal.

### DETAILED DESCRIPTION

In one or more embodiments, the present invention facilitates communication between a finder of a misplaced wireless terminal and an authorized user of that terminal, while simultaneously protecting the identity of both the finder and the user. As will be discussed below in greater detail, for passcode-locked wireless terminals, the finder is able to initiate a communication with the user without having to enter the passcode.

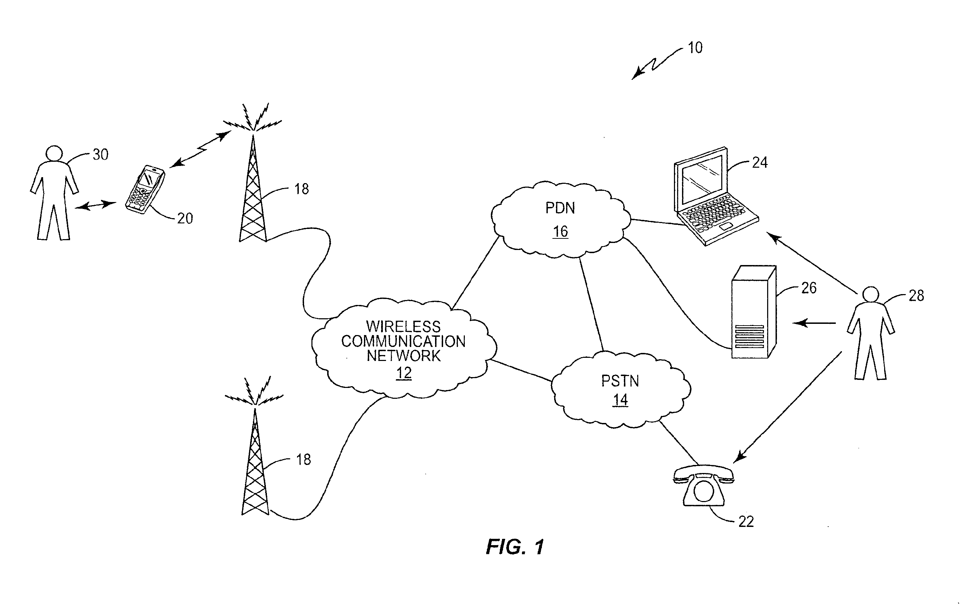

Referring now to the drawings, the present invention will be described in the context of a communication network 10 as shown in Figure 1. The communication network 10 includes a wireless communication network 12 connected to both the public switched telephone network (PSTN) 14, and also to a packet data network (PDN 16). The wireless communication network 12 includes one or more base stations or wireless access points 18 for communicating with one or more wireless terminals 20. The wireless terminals 20 may include, for example, cellular telephones, personal digital assistants, laptop computers, or other wireless communications devices. The wireless communication network 12 may include a GSM (Global System for Mobile Communications) network, a Wideband Code Division Multiple Access (W-CDMA), or a Long Term Evolution (LTE) network, for example.

The PSTN 14 is a circuit-switched network providing both voice and data communications, and in particular it provides voice service to traditional telephones such as telephone 22. PDN 16 includes a packet-switched network that implements known protocols, such as conventional Internet protocols, for routing packets of data from one end point to another. PDN 16 may include a public or private network, and may be a wide-area network, a local-area network, or a combination of both. The Internet is one well-known example of a PDN 16. The PDN 16 facilitates communication between personal computer (PC) 24 and server 26.

The wireless terminal 20 has one or more authorized users 28. An authorized user 28 could include an owner of a wireless terminal 20, and/or someone who is granted permission by the owner to use the terminal for an extended period of time (e.g. a family member or an employee using a company-owned phone), for example. A company information technology (IT) employee tasked with maintaining the security of company wireless terminals may also be considered an authorized user.

The terminal 20 may be passcode-locked to prevent unauthorized access from unauthorized users, such as a finder 30 of the wireless terminal 20. The passcode may include an alphanumeric password, or a predefined touchscreen gesture, for example. Thus, if the terminal 20 is misplaced and the finder 30 locates the misplaced terminal 20, the secret passcode can prevent the finder 30 gaining unauthorized access to the contents of the terminal 20, or from using the terminal 20 without authorization.

The wireless terminal 30 includes features to facilitate communication between the finder 30 and the authorized user 28, to provide the finder 30 information for returning the wireless terminal 20 to the authorized user 28, or both.

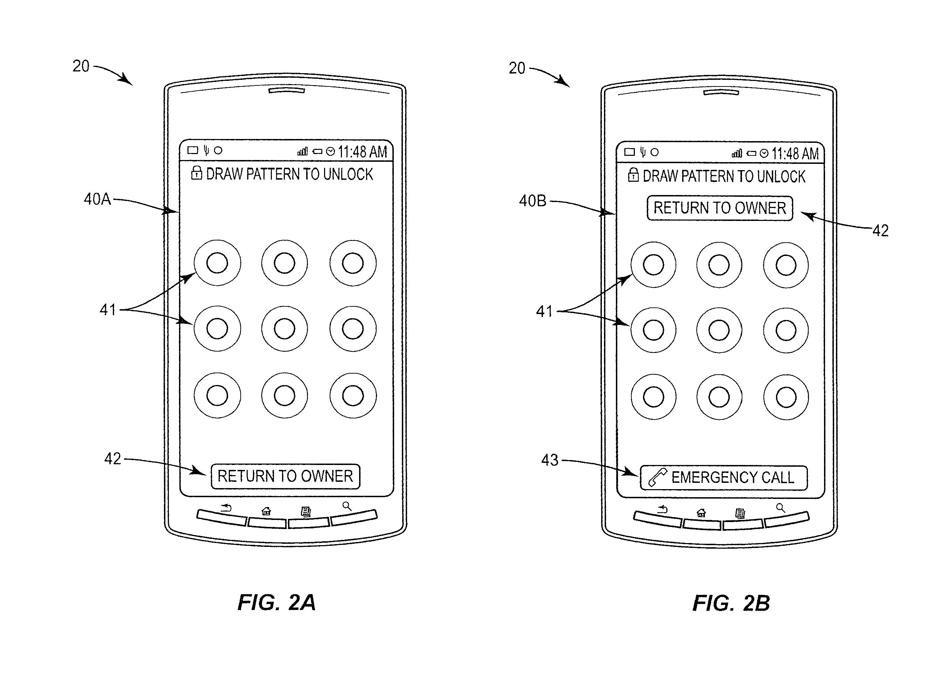

Fig. 2A illustrates an example lock screen 40A for the wireless terminal 20. At the lock screen 40A, the finder 30 of the terminal 20 is able to initiate a communication with the authorized user 28 via the communication network 12 by selecting a "Return to Owner" option 42. The finder is able to do this without having to enter the passcode of the terminal 20.The lock screen may optionally also include an "Emergency Call" option 43 which can be used to place an emergency call (e.g., to "911 ") (as illustrated by lock screen 40B of Fig. 2B). Notably, the lock screen also includes a plurality of options 41 that the user 28 may use to enter the passcode (e.g., as an alphanumeric code or as a drawn pattern). However, because that the passcode will be unknown to the finder 30, the finder 30 may simply select the option 42 to contact the user 28.

The "Return to Owner" option 42 may be present at all times on the lock screen 40A, 40B (or on a home screen for a non passcode-locked phone), for example. Alternatively, the option 42 may be remotely activated by the authorized user 28. In one or more embodiments, the presentation to the finder 30 of the menu option 42 for contacting the authorized user 28 of the wireless terminal 20 is performed responsive to receiving a message from the authorized user 28 indicating that the wireless terminal 20 has been misplaced. The message may be received as a Short Message Service (SMS) message, or via another remote mechanism, for example.

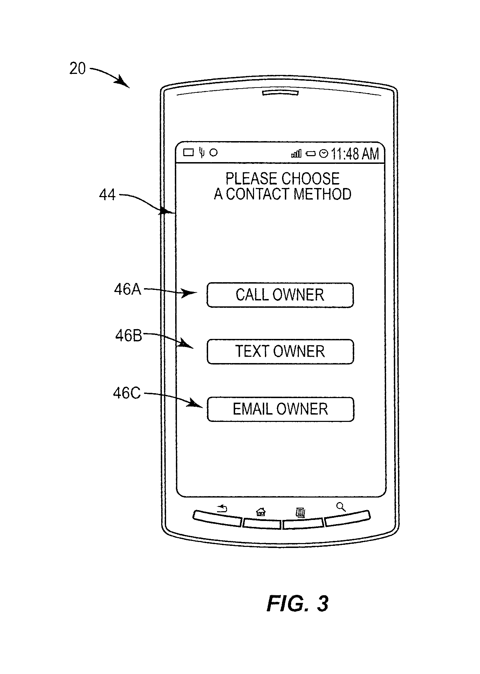

When the finder selects the option 42, the terminal 20 may either directly initiate a communication, such as a phone call, with the authorized user 28, or may instead present a secondary screen 44 that includes a plurality of menu options 46A-C to the finder 30 (see Fig. 3). Each of the options 46A-C corresponds to a different contact method. In the example of Fig. 3, a first option 46A initiates a phone call with the authorized user 28, a second option 46B enables sending of a text message (e.g. an SMS message) to the authorized user 28, and a third menu option 46C enables sending of an email to the authorized user 28.

Referring still to Fig. 3, the finder 30 selecting option 46A initiates a telephone call via the wireless communication network 12 between the wireless terminal 20 and a predefined telephone number associated with the authorized user 28. Such a telephone call would enable the finder 30 to conduct a conversation with the authorized user 28 to discuss returning the wireless terminal 20. The predefined telephone number may correspond to a landline telephone, such as the telephone 22, or may correspond to another wireless terminal 20, for example. In one example, the initiated telephone call is conducted as a Voice over IP (VoIP) call.

The predefined telephone number may be updated on the wireless terminal 20 based on input from the authorized user 28. In one example the authorized user 28 may update that predefined number by directly messaging the lost wireless terminal 20 (e.g. via SMS). As another example, the authorized user 28 may use PC 24 to update a phone number database on the server 26, and the server 26 may communicate with the lost wireless terminal 20 to update the number. The server 26 to wireless terminal 20 communication may occur via a running daemon on the wireless terminal 20 that listens to IP communications on a predefined port, for example.

In some embodiments, initiating a communication between the finder 30 and the authorized user 28 includes preparing a message for the authorized user 28 responsive to input from the finder 30, and transmitting the message to the authorized user 28 via the wireless communication network 12. The message may be transmitted as an SMS message to the predefined telephone number or as an email to a pre-populated email address, for example.

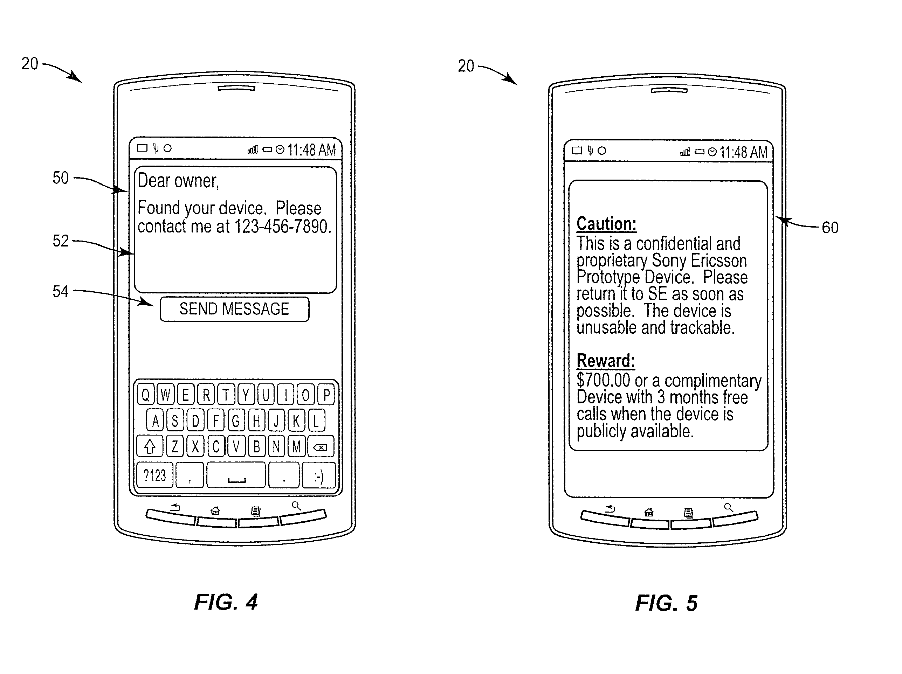

Fig. 4 illustrates an example message entry screen 50 including a text entry area 52 and a message transmission option 54. The wireless terminal 20 prepares a message for the authorized user 28 responsive to the finder 30 inputting text into the text entry area 52. In one or more embodiments, the wireless terminal 20 pre-populates the text entry area 52 with a default message, and modifies the default message responsive to input from the finder 30. The transmitted message may also include geographic coordinates (e.g., Global Positioning System "GPS" coordinates) of the misplaced wireless terminal 20.

Although SMS and email have been discussed above, it is understood that other types of message transmission methods could be used. For example, a message could be sent via an instant messaging program or a social networking service. Whatever the communication method used to transmit the message, the address of the authorized user 28 may be prepopulated to prevent the finder 30 from sending messages to other parties.

In some embodiments, the pre-populated email address (or other contact information for the user) may be remotely updatable by the authorized user 28 much like the update process for the predefined telephone number discussed above. However, in one or more embodiments, the wireless terminal 20 has a hard-coded email address, and the wireless terminal 20 sends an International Mobile Equipment Identity (IMEI) or mobile equipment identifier (MEID) of the wireless terminal 20 along with the message from that hard-coded email address to the server 26. Based on that received message and the enclosed IMEI or MEID, the server may look up a predefined contact method for the authorized user 28 and correspondingly initiate a communication to reach the authorized user 28.

The wireless terminal 20 may be configured to protect the privacy of both the finder 30 and the authorized user 28. For example, the menu options 42, 46 for contacting the authorized user 28 may hide the identity, contact information, or both of the authorized user 28. The finder 30 is unable to enter a phone number, but instead is limited to calling or sending an SMS message to the predefined phone number. Similarly, in email embodiments, the finder 30 is limited to emailing the authorized user 28 using the predefined (and invisible to the finder) email address. These features simultaneously protect the privacy of the authorized user 28, and prevent the finder 30 from calling anyone other than the authorized user (or an emergency number if emergency calling is enabled from the lock screen). Thus, in either the phone call or messaging embodiments, the wireless terminal 20 may be configured to hide the contact information used to contact the authorized user 28 from the finder 30

Dialing a phone number typically emits dual-tone multi-frequency (DTMF) sounds, such that each number dialed has a recognizable DTMF tone. In one or more embodiments, these DTMF tones may be muted when the wireless terminal 20 is dialing the phone number of the authorized user 28, so that the finder 30 is not able to ascertain the hidden phone number of the authorized user 28 by listening to the DTMF tones.

Referring to Fig. 5, the wireless terminal 20 may also be configured to provide information for returning the wireless terminal 20 to the authorized user 28 without the need for initiating a communication between the finder 30 and the authorized user 28. Responsive to receiving a message from the authorized user 28 that the wireless terminal 20 has been misplaced, the wireless terminal 20 may disable communication functionality of the wireless terminal 20, and displays a message 60 providing information for returning the wireless terminal to the authorized user 28. This message may also provide information regarding an award (e.g. a monetary award) for returning the wireless terminal 20. This feature would be useful for proprietary and prototype devices for which a wireless terminal manufacturer wishes to maintain secrecy. The received message from the authorized user 28 indicating wireless terminal 20 misplacement may be received using any of the methods described above (e.g., SMS message, email, via server 26, etc.).

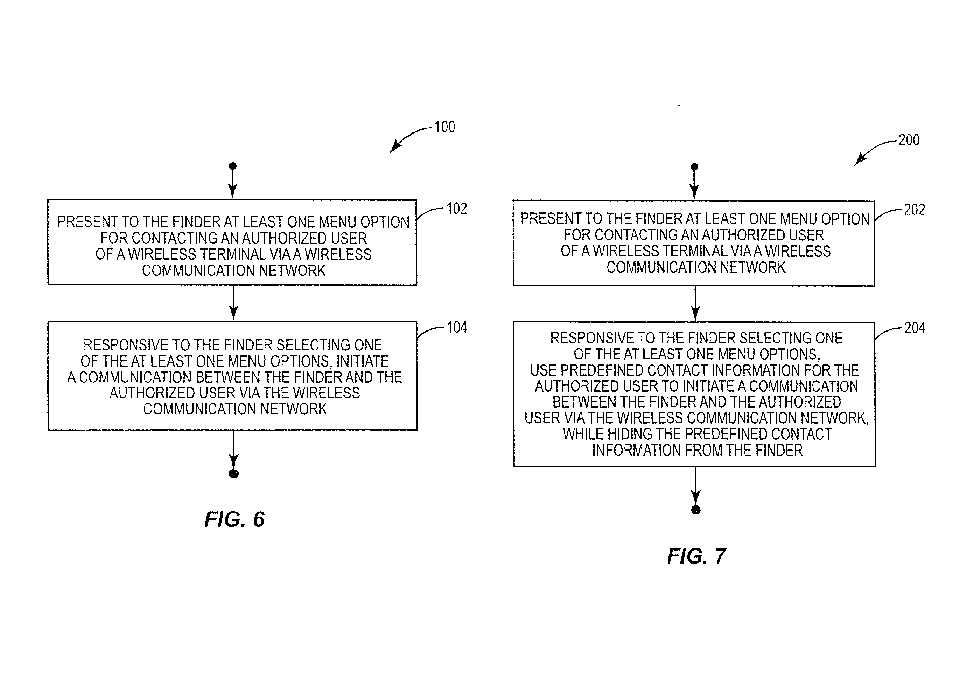

Fig. 6 illustrates an example method 100 of facilitating communication between a finder 30 of a misplaced passcode-locked wireless terminal 20 and an authorized user 28 of the wireless terminal 20. The method 100 is implemented by the wireless terminal 20. According to the method 100, at least one menu option is presented to the finder 30 (step 102) for contacting the authorized 28 user via the wireless communication network 12 with which the wireless terminal 20 is associated. The at least one menu option is accessible from the lock screen 40A, 40B of the wireless terminal 20 without entry of the passcode (see Figs. 2A, 2B). Responsive to the finder 30 selecting one of the at least one menu options, a communication is initiated (step 104) between the finder 30 and the authorized user 28 via the wireless communication network 12.

Fig. 7 illustrates an example method 200 of facilitating communication between a finder 30 of a misplaced wireless terminal and an authorized user 28 of the wireless terminal 20. The method 200 is implemented by the wireless terminal 20, and is applicable to both passcode-locked and non passcode-locked wireless terminals. According to the method 200, at least one menu option is presented to the finder 30 (step 202) for contacting the authorized 28 user via the wireless communication network 12 with which the wireless terminal 20 is associated. Responsive to the finder 30 selecting one of the at least one menu options, predefined contact information is used to initiate a communication between the finder 30 and the authorized user 28 (step 204), while hiding the predefined contact information from the finder.

Although the methods 100, 200 have been illustrated and described separately, it is understood that they could both be performed by the same wireless terminal 20. That is, steps 104 and 204 could both be performed as part of initiating contact between the finder 30 and the authorized user 28.

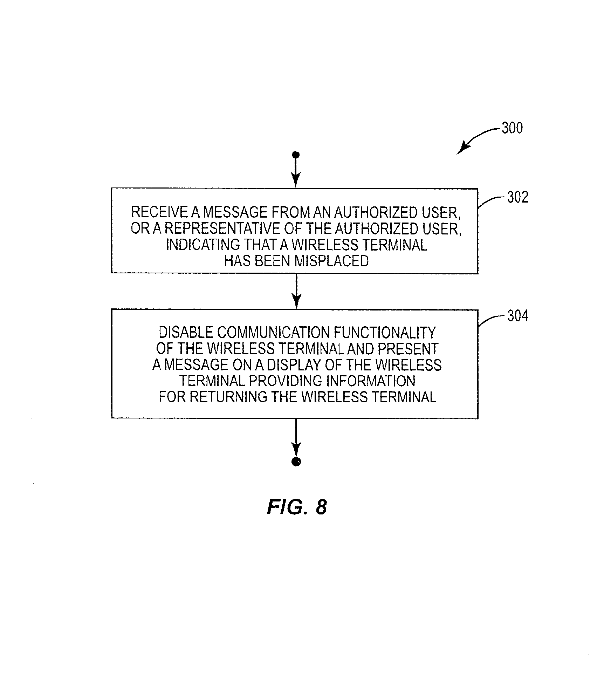

Fig. 8 illustrates an example method 300 of providing the finder 30 of a misplaced wireless terminal 20 information for returning the wireless terminal 20 to an authorized user 28 of the wireless terminal 20. The method 300 is implemented by the wireless terminal 20. According to the method 100, a message is received (step 302) from the authorized user 28 indicating that the wireless terminal 20 has been misplaced. Responsive to the received message, communication functionality of the wireless terminal 20 may be disabled, and a message is presented on a display of the wireless terminal 28 (step 304), with the message providing information for returning the wireless terminal to the authorized user 28 (see, e.g., Fig. 5).

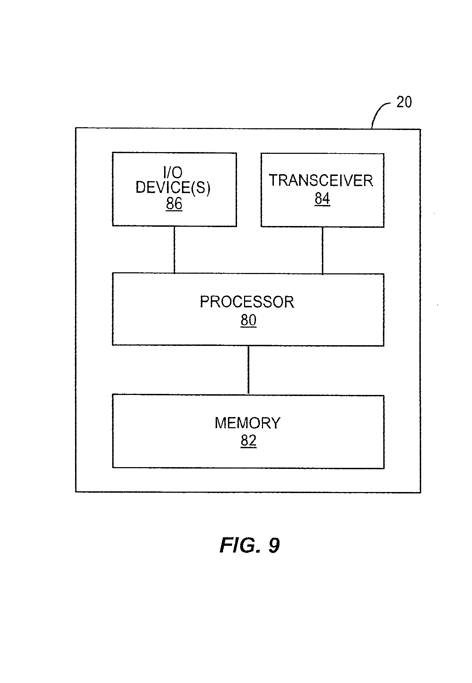

Fig. 9 illustrates an example wireless terminal 20 operative to facilitate communication between a finder and an authorized user of the terminal (see method 100), to provide information to the finder for returning the wireless terminal to the authorized user of the wireless terminal (see method 200), or both. The terminal includes a processor 80, memory 82, a transceiver 84, and one or more input/output (I/O) devices 86. The transceiver 84 is operative to transmit signals to, and receive signals from, the wireless communication network 12. The one or more I/O devices 86 include a display and an input device. This may include, for example, a touchscreen display of a mobile phone that simultaneously acts as a display and input device. Of course, this is only an example, and it is possible that the one or more I/O devices 86 may include a separate display and input device. The processor 80 is operatively connected to the memory 82, the transceiver 84, and the one or more I/O devices 86, and is operable to implement the method 100, the method 200, or both. The processor 80 may include an application-specific integrated circuit (ASIC), a digital signal processor (DSP), a microcontroller, or any combination thereof.

Thus, in one or more embodiments the processor 80 is configured to present to the finder 30 of the wireless terminal 20 at least one menu option (e.g. menu options 42, 46) on a display for contacting the authorized user of the wireless terminal 20 via the wireless communication network 12. Responsive to the finder 30 selecting of one of the at least one menu options, the processor 80 is configured to initiate a communication between the finder 30 and the authorized user 28 via the wireless communication network 12.

If the wireless terminal 20 is passcode-locked, the at least one menu option is accessible to the finder 30 from the lock screen 40A, 40B of the wireless terminal 20 without the finder 30 having to enter the passcode. Additionally, for both passcode-locked and non passcode-locked terminals, the terminal 20 is operable to initiate the communication between the finder 30 and the authorized user 28 using predefined contact information for the authorized user 28, while hiding that predefined contact information from the finder 30.

In the same or another embodiment, the processor 80 is configured to receive, via the transceiver 84, a message from the authorized user 28 indicating that the wireless terminal 20 has been misplaced. Responsive to the received message, the processor 80 is configured disable communication functionality of the wireless terminal 20 and to present a message on a display of the wireless terminal, with the message providing information for returning the wireless terminal to the authorized user (see, e.g., Fig. 5).

Although the methods 100, 200 have been separately described, it is possible that the mobile terminal 20 may be operable to implement either one or both of the methods. In one example, upon misplacing the wireless terminal 20, the authorized user 28 could remotely select which of the methods to implement, and could communicate that selection to the wireless terminal using any of the methods described above (e.g., SMS message, via server 26,etc.).

Thus, the foregoing description and the accompanying drawings represent nonlimiting examples of the methods and apparatus taught herein. As such, the present invention is not limited by the foregoing description and accompanying drawings. Instead, the present invention is limited only by the following claims and their legal equivalents.

## Claims

1. A method of facilitating communication between a finder (30) of a misplaced passcode-locked wireless terminal (20) and an authorized user (28) of the wireless terminal, the method being implemented by the wireless terminal (20) and comprising:
presenting to the finder (30) at least one menu option (42; 46A, 46B, 46C) for contacting the authorized user (28) via a wireless communication network (12) with which the wireless terminal (20) is associated, the at least one menu option (42) being accessible from a lock screen (40A; 40B) of the wireless terminal without entry of the passcode; and
responsive to the finder (30) selecting one of the at least one menu options (42; 46A, 46B, 46C), initiating a communication between the finder (30) and the authorized user (28) via the wireless communication network (12).

2. The method according to claim 1, wherein said presenting to the finder (30) at least one menu option (42; 46A, 46B, 46C) for contacting the authorized user (28) of the wireless terminal (20) comprises presenting a menu option (46A, 46B, 46C) for each of a plurality of different contact methods.

3. The method according to claim 1 or 2, wherein said initiating a communication between the finder (30) and authorized user (28) comprises initiating a telephone call via the wireless communication network (12) between the wireless terminal (20) and a predefined telephone number associated with the authorized user (28).

4. The method according to claim 3, further comprising:
updating the predefined telephone number responsive to an updated telephone number being transmitted to the wireless terminal (20) from the authorized user (28).

5. The method according to any one of the preceding claims, wherein said initiating a communication between the finder (30) and the authorized user (28) comprises:
preparing a message for the authorized user (28) responsive to input from the finder (30); and
transmitting the message to the authorized user (28) via the wireless communication network (12).

6. The method according to claim 5, wherein the message is transmitted as an email.

7. The method according to claim 5, wherein the message text is transmitted as a Short Message Service (SMS) message.

8. The method according to any one of claims 5 to 7, wherein said transmitting the message to the authorized user (28) via the wireless communication network (12) includes transmitting geographic coordinates of the wireless terminal (20) to the authorized user (28).

9. The method according to any one of claims 5 to 8, wherein said preparing a message for the authorized user (28) responsive to input from the finder (30) comprises:
pre-populating a text entry field (52) with a default message; and
modifying the default message responsive to input from the finder (30).

10. The method according to any one of the preceding claims, wherein said presenting to the finder (30) at least one menu option (42; 46A, 46B, 46C) for contacting the authorized user (28) of the wireless terminal (20) is performed responsive to receiving a message from the authorized user (28) indicating that the wireless terminal (20) has been misplaced.

11. The method according to any one of the preceding claims, wherein the at least one menu option (42; 46A, 46B, 46C) for contacting the authorized user of the wireless terminal (20) hides the identity of the authorized user (28), contact information of the authorized user (28), or both, from the finder (30).

12. A wireless terminal (20) operative to facilitate communication between a finder (30) of a misplaced passcode-locked wireless terminal (20) and an authorized user (28) of the wireless terminal (20), the wireless terminal (20) comprising:
a transceiver (84) operative to transmit signals to, and receive signals from, a wireless communication network (12);
a display; and
a processor (80) operatively coupled to the transceiver (84) and to the display, the processor (80) being configured to:
present to a finder (30) of the wireless terminal (20) at least one menu option (42; 46A, 46B, 46C) on the display for contacting the authorized user (28) of the wireless terminal (20) via the wireless communication network (12), the at least one menu option (42; 46A, 46B, 46C) being accessible from a lock screen (40A; 40B) of the wireless terminal (20) without entry of the passcode; and
responsive to the finder (30) selecting one of the at least one menu options (42; 46A, 46B, 46C), to initiate a communication between the finder (30) and the authorized user (28) via the wireless communication network (12).

13. The wireless terminal according to claim 12, wherein the processor is configured to perform steps of a method according to any one of claims 1 to 11.

14. A method of providing a finder (30) of a misplaced wireless terminal (20) information for returning the wireless terminal (20) to an authorized user (28) of the wireless terminal (20), the method being implemented by the wireless terminal (20) and comprising:
receiving a message from the authorized user (28) indicating that the wireless terminal (20) has been misplaced;
responsive to the received message, disabling communication functionality of the wireless terminal (20) and presenting a message on a display of the wireless terminal (20), the message providing information for returning the wireless terminal (20) to the authorized user (28).

15. The method according to claim 14, wherein the message also indicates a reward that is achievable by returning the wireless terminal (20) to the authorized user (28).

16. A wireless terminal (20) operative to provide a finder (30) of a misplaced wireless terminal (20) information for returning the wireless terminal (20) to an authorized user (28) of the wireless terminal (20), the wireless terminal (20) comprising:
a transceiver (84) operative to transmit signals to, and receive signals from, a wireless communication network (12);
a display; and
a processor (80) operatively coupled to the transceiver (84), the processor (80) being configured to:
receive, via the transceiver (84), a message from the authorized user (28) indicating that the wireless terminal (20) has been misplaced; and
responsive to the received message, disable communication functionality of the wireless terminal (20) and present a message on the display of the wireless terminal (20), the message providing information for returning the wireless terminal (20) to the authorized user (28).

17. A method of facilitating communication between a finder (30) of a misplaced wireless terminal (20) and an authorized user (28) of the wireless terminal (20), the method being implemented by the wireless terminal (20) and comprising:
presenting to the finder (30) at least one menu option (42; 46A, 46B, 46C) for contacting the authorized user (28) via a wireless communication network (12) with which the wireless terminal (20) is associated; and
responsive to the finder (30) selecting one of the at least one menu options (42; 46A, 46B, 46C), using predefined contact information for the authorized user (28) to initiate a communication between the finder (30) and the authorized user (28) via the wireless communication network (12), wherein the at least one menu option (42; 46A, 46B, 46C) and the initiated communication hide the predefined contact information from the finder (30).

18. The method according to claim 17, wherein said presenting to the finder (30) at least one menu option (42; 46A, 46B, 46C) for contacting the authorized user (28) of the wireless terminal (20) comprises presenting a menu option (46A, 46B, 46C) for each of a plurality of different contact methods.
